# EUROPEAN PATENT SPECIFICATION

(11) **EP 2 944 199 B1**
(45) Date of publication and mention of the grant of the patent: **31.08.2016**
(21) Application number: 14168138.7
(22) Date of filing: 13.05.2014
(51) Int. Cl.: A22C 13/00, C08K 5/053

(54) **Food casing with fungicidal characteristics**
Lebensmittelhülle mit fungizider Ausstattung
Emballage alimentaire doté d'un fongicide

(43) Date of publication of application: 18.11.2015
(73) Proprietor: ViskoTeepak Belgium NV, 3920 Lommel (BE)
(72) Inventor: Wielockx, Pierre, 3920 Lommel (BE); Quinten, Johan, 3920 Lommel (BE)
(74) Representative: Papula Oy

(56) References cited:
- US-A- 4 867 204
- US-A- 5 262 211
- Arch Chemicals: "Zinc Pyrithione - Product Stewardship summary", , 31 August 2008 (2008-08-31), XP055120311, Retrieved from the Internet: URL:http://www.archchemicals.com/Fed/Corpo rate/Docs/ACC/ARCH_CHEMICALS-ZINC_PYRITHIO NE.pdf [retrieved on 2014-05-27]
- JERUSIK ET AL: "Fungi and paper manufacture", FUNGAL BIOLOGY REVIEWS, ELSEVIER LTD, GB, vol. 24, no. 1-2, 1 February 2010 (2010-02-01), pages 68-72, XP027416445, ISSN: 1749-4613 [retrieved on 2010-07-02]

## Description

### FIELD OF THE INVENTION

The invention relates to an artificial food casing and to a method for manufacturing the artificial food casing.

### BACKGROUND OF THE INVENTION

Artificial food casings have been used for decades for the production of e.g. raw sausages, dry sausages and semi-dry sausages.

In the manufacture of processed sausage products, a meat emulsion is prepared from comminuted meat together with fillers, seasonings etc. An artificial tubular food casing, such as one containing non-edible cellulose, may be loaded onto the stuffing horn of a filling machine and stuffed with meat emulsion. Depending on the type of sausage product, the casing may be twisted, tied or clipped into suitable size, or formed into chubs or sticks, and further processed.

Dry or semi-dry sausages are typically larger sausage products and include such representative examples as air dried pepperoni, soft salami, hard salami and dry salami, and the like. This type of sausage has reduced moisture content, and its preparation usually includes drying or ripening as one step of its manufacture. A dry sausage may also be smoked. Cooking may also be performed in some instances in the smoking step. Some sausages may be fermented during their processing.

Furthermore, artificial food casings such as cellulose-based food casings typically undergo a step of soaking in water or aqueous solution prior to stuffing.

After stuffing, during fermentation, drying, or ripening, sausages may come in contact with mold spores which may start to grow on the sausage. Therefore, during ripening of certain food products such as dry sausages, mold growth sometimes occurs and renders the sausages unsuitable for consumption.

The use of various components having antifungal properties in food casings has been suggested. See e.g. US4867204, which discloses an artificial food casing comprising an antimycotic agent.

However, many of them suffer from drawbacks such as loss of effectiveness caused by dilution and/or dissolution of the antifungal component during the soaking step and/or any steps of stuffing and preparing the food product. Furthermore, many of them require an additional step of e.g. coating the artificial food casing after it has been stuffed or may be otherwise incompatible with the processes of manufacture of the food product. Many antifungal components are also not acceptable for use with foodstuffs according to laws of some countries.

### SUMMARY

The invention relates to an artificial food casing according to claim 1.

The invention further relates to a method for manufacturing an artificial food casing according to claim 9.

### DETAILED DESCRIPTION

The purpose of the present invention is to provide an artificial food casing capable of inhibiting or suppressing mold growth.

Reference will now be made in detail to the embodiments of the present invention.

The invention relates to an artificial food casing comprising a metal salt of pyrithione.

In one embodiment, the artificial food casing comprises regenerated cellulose, plastic and/or textile.

In one embodiment, the artificial food casing comprises regenerated cellulose.

In one embodiment, the artificial food casing comprises at least one layer of regenerated cellulose.

In one embodiment, the artificial food casing is a cellulose-based food casing.

In one embodiment, the artificial food casing is a tubular cellulose-based food casing.

In one embodiment, the artificial food casing comprises a fibrous reinforcement. The fibrous reinforcement may be tubular. A fibrous reinforcement may be provided e.g. by shaping a fiber paper to form a tube.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement; and the outside layer and/or the inside layer comprises regenerated cellulose.

In one embodiment, the cellulose-based food casing is a single layer viscose casing or a double layer viscose casing.

In this context, the term "single layer viscose casing" or "SVC" should be understood as referring to a cellulose-based food casing comprising a fibrous reinforcement and an outside layer or an inside layer comprising regenerated cellulose. In other words, a single layer viscose casing comprises a fibrous reinforcement comprising an inside surface and an outside surface, wherein the inside surface or the outside surface is impregnated with viscose by applying viscose to either the inside surface or the outside surface of the fibrous reinforcement only. This embodiment has the added utility that it is relatively simple and cost-effective to manufacture.

In one embodiment, a single layer viscose casing comprises a fibrous reinforcement and an outside layer comprising regenerated cellulose. In other words, in one embodiment of a single layer viscose casing, a fibrous reinforcement comprising an inside surface and an outside surface is impregnated with viscose by applying viscose to the outside surface of the fibrous reinforcement only.

In one embodiment, the cellulose-based food casing is a double layer viscose casing. In this context, the term "double layer viscose casing" or "DVC" should be understood as referring to a cellulose-based food casing comprising an inside layer, an outside layer and a fibrous reinforcement between the outside layer and inside layer, wherein the outside layer and inside layer comprise regenerated cellulose. In other words, a double layer viscose casing comprises a fibrous reinforcement impregnated with viscose by applying viscose to both sides of the fibrous reinforcement. This embodiment has the added utility that it is mechanically relatively strong and thus can withstand well processing steps that cause stretching of the cellulose-based food casing.

In one embodiment, the artificial food casing comprises plastic.

In this context, the term "plastic" should be understood as referring to any type of plastic suitable for use in a food casing. Plastics such as polyamides or PVDC and mixtures thereof are commonly used in food casings.

In one embodiment, the artificial food casing comprises textile.

In this context, the term "textile" should be understood as referring to a textile comprising e.g. natural fibers, linen, silk, wool, modified natural fibers, synthetic fibers, or any mixtures thereof.

In one embodiment, the artificial food casing is tubular.

In one embodiment, the artificial food casing comprises a metal salt of pyrithione in admixture with regenerated cellulose. The metal salt of pyrithione, e.g. in an aqueous solution or dispersion, may be blended with viscose prior to formation of the viscose into a film or coating by extrusion and regeneration. This embodiment has the added utility that the metal salt of pyrithione is embedded (blended) integrally with the regenerated cellulose and is therefore well retained in the artificial food casing; dissolution and/or dilution of the metal salt of pyrithione is low and thus the artificial food casing retains its capability of inhibiting and/or suppressing mold growth even during the processing, for instance the soaking step, of the artificial food casing and/or the food product contained therein.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement, wherein the outside layer and/or the inside layer comprises regenerated cellulose and a metal salt of pyrithione.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement; wherein the outside layer and/or the inside layer comprises regenerated cellulose, and the outside layer comprises a metal salt of pyrithione. This embodiment has the added utility that mold growth typically occurs on the outside surface of the artificial food casing; thus it may be sufficient for the outside layer only to comprise the metal salt of pyrithione to inhibit or suppress mold growth on or near the surface of the artificial food casing.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement, wherein the outside layer and/or the inside layer comprises a metal salt of pyrithione in admixture with regenerated cellulose.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement, wherein the outside layer comprises a metal salt of pyrithione in admixture with regenerated cellulose.

In one embodiment, the artificial food casing comprises a coating comprising a metal salt of pyrithione. The coating may further comprise e.g. a carrier such as a printing ink or a lacquer.

In one embodiment, the outside of the artificial food casing comprises a coating comprising a metal salt of pyrithione. In other words, the outside surface of the artificial food casing is coated with a coating comprising a metal salt of pyrithione.

Various metal salts of pyrithione having antifungal properties are known and commercially available, such as zinc pyrithione, copper pyrithione and sodium pyrithione (also known as 2-pyridinethiol-1-oxide sodium salt or sodium (2-sodium 2-pyridenethio-1-oxide)).

In one embodiment, the metal salt of pyrithione is a divalent metal salt of pyrithione.

In one embodiment, the metal salt of pyrithione is a polyvalent metal salt of pyrithione.

In one embodiment, the metal salt of pyrithione is zinc pyrithione, copper pyrithione or a mixture thereof.

In one embodiment, the metal salt of pyrithione is zinc pyrithione. Zinc pyrithione is also known as bis(2-pyridylthio)zinc 1,1'-dioxide.

In one embodiment, the metal salt of pyrithione is copper pyrithione. Copper pyrithione is also known as bis(1-hydroxy-1H-pyridine-2-thionato-O,S) copper.

The metal salt of pyrithione may be selected so that it fulfills any requirements concerning food safety.

In one embodiment, the artificial food casing comprises a composition comprising the metal salt of pyrithione.

In one embodiment, the artificial food casing is formed by admixing a composition comprising the metal salt of pyrithione and viscose and by extruding the mixture obtained into an artificial food casing.

In one embodiment, the artificial food casing is formed by admixing a composition comprising the metal salt of pyrithione and viscose and by impregnating the inside surface and/or an outside surface of a fibrous reinforcement with the mixture obtained.

In one embodiment, the composition comprising the metal salt of pyrithione is a solution comprising the metal salt of pyrithione.

In one embodiment, the composition comprising the metal salt of pyrithione is an aqueous solution comprising the metal salt of pyrithione.

In one embodiment, the metal salt of pyrithione is poorly soluble in water.

In one embodiment, the composition comprising the metal salt of pyrithione is a dispersion of the metal salt of pyrithione.

In one embodiment, the composition comprising the metal salt of pyrithione is an aqueous dispersion of the metal salt of pyrithione.

Certain metal salts of pyrithione, such as zinc pyrithione and copper pyrithione, are poorly soluble in e.g. aqueous solutions. They may therefore be provided as a composition such as an aqueous dispersion. An aqueous dispersion of a metal salt of pyrithione is a mixture in aqueous medium comprising very fine particles of the metal salt of pyrithione. An aqueous dispersion of a metal salt of pyrithione may further comprise e.g. one or more dispersants, viscosity control agents or other additives or any mixtures thereof that help to formulate and stabilise the aqueous dispersion.

The composition comprising the metal salt of pyrithione may also be formulated so that it is compatible with admixing with viscose.

In one embodiment, the composition comprising the metal salt of pyrithione is an aqueous dispersion of zinc pyrithione.

The particle size of the zinc pyrithione in aqueous dispersion may be e.g. 5 µm or less; or 1 µm or less. In one embodiment, at least 90% of particles of zinc pyrithione in the aqueous dispersion have a particle size of 1 µm or less.

In one embodiment, the pH of the aqueous dispersion of zinc pyrithione is in the range of about 6 to 11, about 9 to 11, or about 6 to 9.

In one embodiment, the aqueous dispersion of zinc pyrithione comprises about 30-50 %w/w, or about 35-50 %w/w, or about 45-60 %w/w, or about 48-56 %w/w, or about 48-52 %w/w, or about 35-40 %w/w of zinc pyrithione.

Metal salts of pyrithione may have the tendency to cause undesirable discoloration in a composition or product comprising them. The undesirable discoloration may refer to any unacceptable blue, grey, black, purple or green colour other than the natural colour or desired artificial colour of the artificial food casing. It is considered to be caused by interaction with ferric ions and/or cupric ions. For instance, in the presence of ferric ion, sodium or zinc pyrithione-containing compositions tend to turn blue even though the ferric ion is present in very small amounts. The discoloration may be undesirable for aesthetic reasons.

In one embodiment, the composition comprising the metal salt of pyrithione is formulated so that undesirable discoloration caused by interaction with ferric and/or cupric ions is inhibited. Various such compositions and methods for preparing thereof are known in the art. For instance, publications US 4818436, US 4161526 and US 5883154 disclose solutions for reducing discoloration in compositions comprising metal salts of pyrithione. Such compositions are also commercially available, e.g. a zinc pyrithione composition under the trade name Zinc OMADINE™ ZOE Dispersion (Lonza, USA).

In one embodiment, the amount of the metal salt of pyrithione is sufficient to inhibit or suppress mold growth. The amount of the metal salt of pyrithione in the artificial food casing may be adjusted e.g. depending on the artificial food casing and/or the processing conditions of the artificial food casing and/or of the food contained in the artificial food casing so that mold growth is inhibited or suppressed partially or in full. The amount of the metal salt of pyrithione may also depend on wherein the artificial food casing the metal salt of pyrithione is contained. If e.g. only the outside layer of the artificial food casing comprises the metal salt of pyrithione, the amount of the metal salt of pyrithione in the artificial food casing may be lower than if the metal salt of pyrithione were distributed throughout the artificial food casing.

In this context, the term "mold" should be understood as referring to a diverse number of fungal species. Typically the growth of hyphae of such fungal species results in discoloration and fuzzy appearance, especially on food and food products. In particular, the term "mold" may refer to fungal species which cause food spoilage. Mold growth on an artificial food casing may often be observed as spots or colonies.

In one embodiment, the artificial food casing comprises about 0.1 - 10%, or about 0.2 - 10%, or about 0.3 - 5%, or at least about 0.1%, or at least about 0.2%, or at least about 0.3%, or at least about 1%, or at least about 1.5%, or at least about 2%, or at least about 2.5%, or at least about 3%, or at least about 3.5%, or at least about 4%, or at least about 4.5%, or at least about 5% of the metal salt of pyrithione by weight based on the total dry weight of the artificial food casing.

In one embodiment, the artificial food casing comprises 0.1 - 10%, or 0.2 - 10%, or 0.3 - 5%, or at least 0.1%, or at least 0.2%, or at least 0.3%, or at least 1%, or at least 1.5%, or at least 2%, or at least 2.5%, or at least 3%, or at least 3.5%, or at least 4%, or at least 4.5%, or at least 5% of the metal salt of pyrithione by weight based on the total dry weight of the artificial food casing.

In one embodiment, the artificial food casing comprises regenerated cellulose and about 0.1 - 10%, or about 0.2 - 10%, or about 0.3 - 5%, or at least about 0.1%, or at least about 0.2%, or at least about 0.3%, or at least about 1%, or at least about 1.5%, or at least about 2%, or at least about 2.5%, or at least about 3%, or at least about 3.5%, or at least about 4%, or or at least about 4.5%, at least about 5% of the metal salt of pyrithione by weight based on the total dry weight of regenerated cellulose.

In one embodiment, the artificial food casing comprises regenerated cellulose and 0.1 - 10%, or 0.2 - 10%, or 0.3 - 5%, or at least 0.1%, or at least 0.2%, or at least 0.3%, or at least 1%, or at least 1.5%, or at least 2%, or at least 2.5%, or at least 3%, or at least 3.5%, or at least 4%, or or at least 4.5%, at least 5% of the metal salt of pyrithione by weight based on the total dry weight of regenerated cellulose.

The invention further relates to a method for manufacturing the artificial food casing according to one or more embodiments of the present invention, which method comprises adding a metal salt of pyrithione to the artificial food casing.

The metal salt of pyrithione may be added to the artificial food casing during or after its manufacturing process.

In the context of the method for manufacturing the artificial food casing, the metal salt of pyrithione may be any metal salt of pyrithione described herein, for instance zinc pyrithione.

In one embodiment, the method comprises:
step a) admixing viscose and the metal salt of pyrithione to obtain a mixture; and
step b1) extruding the mixture obtainable from step a) into an artificial food casing.

The metal salt of pyrithione, e.g. in an aqueous solution or dispersion, may thus be blended with viscose prior to formation of the viscose into a film or coating by extrusion and regeneration.

In one embodiment, the method for manufacturing a cellulose-based food casing according to one or more embodiments of the invention comprises:
step a) admixing viscose and the metal salt of pyrithione to obtain a mixture; and
step b2) impregnating the inside surface and/or outside surface of a fibrous reinforcement with the mixture obtainable from step a).

In one embodiment, the method for manufacturing a cellulose-based food casing according to one or more embodiments of the invention comprises:
step a) admixing viscose and the metal salt of pyrithione to obtain a mixture; and
step b2) impregnating the outside surface of a fibrous reinforcement with the mixture obtainable from step a).

If only the outside surface of the fibrous reinforcement is impregnated with the mixture obtainable from step a), the inside surface of the fibrous reinforcement may be impregnated with viscose. Likewise, if only the inside surface of the fibrous reinforcement is impregnated with the mixture obtainable from step a), the outside surface of the fibrous reinforcement may be impregnated with viscose.

Embodiments in which a metal salt of pyrithione is admixed with viscose have the added utility that the metal salt of pyrithione can easily be added into the artificial (cellulose-based) food casing during the manufacture of the artificial food casing e.g. in an online process by injecting the metal salt of pyrithione into the viscose stream. The amount of the metal salt of pyrithione is also easy to adjust in such an online process. Many metal salts of pyrithione such as zinc pyrithione or compositions comprising them are compatible with viscose e.g. in terms of pH and can withstand the further processing steps of the artificial food casing. Such embodiments also have the added utility that the metal salt of pyrithione is embedded (blended) integrally with the regenerated cellulose and is therefore well retained in the artificial food casing; dissolution and/or dilution of the metal salt of pyrithione is low and thus the artificial food casing retains its antifungal properties even during the processing, for instance the soaking step, of the artificial food casing and/or the food product contained therein.

In one embodiment, the method further comprises:
step c) coagulating and washing the artificial (cellulose-based) food casing obtainable from step b1) or step b2).

In one embodiment, step a) comprises admixing viscose and a composition comprising a metal salt of pyrithione to obtain a mixture.

In the context of the method for manufacturing the artificial food casing, the composition comprising a metal salt of pyrithione may be any composition comprising any metal salt of pyrithione described herein.

In one embodiment, the method comprises impregnating or coating an artificial food casing with a composition comprising a metal salt of pyrithione.

In one embodiment, the method comprises impregnating or coating an artificial food casing with a composition comprising a metal salt of pyrithione by dipping the artificial food casing into the composition comprising the metal salt of pyrithione.

In one embodiment, the method comprises impregnating or coating an artificial food casing with a composition comprising a metal salt of pyrithione by internal bubble coating.

In one embodiment, the method comprises impregnating or coating an artificial food casing with a composition comprising a metal salt of pyrithione by internal bubble coating and subsequently inverting the artificial food casing.

In one embodiment, the artificial food casing is coated or impregnated with a composition comprising about 0.1 - 10%, or about 0.3 - 5%, or at least about 0.1%, or at least about 0.3%, or at least about 1%, or at least about 1.5%, or at least about 2%, or at least about 2.5%, or at least about 3%, or at least about 3.5%, or at least about 4%, or at least about 4.5%, or at least about 5% of the metal salt of pyrithione by weight based on the total weight of the composition.

In one embodiment, the artificial food casing is coated or impregnated with aqueous solution comprising about 0.1 - 10%, or about 0.3 - 5%, or at least about 0.1%, or at least about 0.3%, or at least about 1%, or at least about 1.5%, or at least about 2%, or at least about 2.5%, or at least about 3%, or at least about 3.5%, or at least about 4%, or at least about 4.5%, or at least about 5% of the metal salt of pyrithione by weight based on the total weight of the aqueous solution.

In one embodiment, the method comprises coating an artificial food casing with a composition comprising a metal salt of pyrithione by printing. Methods for printing an artificial food casing are well known in the art.

In one embodiment, the method comprises:
step a) admixing the metal salt of pyrithione and a carrier to obtain a mixture; and
step b) coating the artificial food casing by printing with the mixture obtainable from step a).

In one embodiment, the carrier is a printing ink or a lacquer. The printing ink or a lacquer may be clear, or it may further comprise e.g. a pigment, a dye or any other suitable additive.

In one embodiment, the composition comprising a metal salt of pyrithione comprises an aqueous dispersion of zinc pyrithione, copper pyrithione or a mixture thereof.

In one embodiment, the composition comprising a metal salt of pyrithione comprises an aqueous dispersion of zinc pyrithione.

In one embodiment, the composition comprising a metal salt of pyrithione comprises an aqueous dispersion of copper pyrithione.

In one embodiment, the method comprises impregnating or coating the inside surface and/or the outside surface of the artificial food casing with a composition comprising a metal salt of pyrithione.

In one embodiment, the method comprises impregnating or coating the outside surface of the artificial food casing with a composition comprising a metal salt of pyrithione.

In one embodiment, the artificial food casing comprises a fibrous reinforcement comprising an inside surface and an outside surface; and an outside layer on the outside surface of the fibrous reinforcement and/or an inside layer on the inside surface of the fibrous reinforcement, wherein the outside layer and/or the inside layer comprises regenerated cellulose; and the method comprises impregnating or coating the inside layer and/or the outside layer with a composition comprising a metal salt of pyrithione.

In one embodiment, the artificial food casing comprises a fibrous reinforcement comprising an inside surface and an outside surface; and an outside layer on the outside surface of the fibrous reinforcement and optionally an inside layer on the inside surface of the fibrous reinforcement, wherein the outside layer and the inside layer comprise regenerated cellulose; and the method comprises impregnating or coating the outside layer with a composition comprising a metal salt of pyrithione.

The present invention also relates to an artificial food casing obtainable by the method according to one or more embodiments of the invention.

The artificial food casing according to one or more embodiments of the invention has a number of advantages. It can significantly inhibit and/or suppress the growth of mold and other fungi and therefore improve the quality of the food product contained in the artificial food casing and reduce losses caused by mold growth. The artificial food casing can retain its antifungal properties even after soaking in water prior to stuffing; the metal salt of pyrithione is not easily dissolved or diluted from the artificial food casing. An additional step of treating the food product after stuffing the artificial food casing may be avoided.

The artificial food casing according to one or more embodiments is also simple and cost-efficient to manufacture and to use. Metal salts of pyrithione are compatible with existing processes of producing artificial food casings and are e.g. pH-wise compatible with viscose solutions used to manufacture cellulose-based food casings. Alternative components with antifungal properties typically require an additional step of adding the component with antifungal properties into the artificial food casing by e.g. dipping or coating the artificial food casing; with the artificial food casing according to one or more embodiments of the invention, such additional steps may be avoided, if desired. When admixed in viscose, which mixture is subsequently regenerated, the amount of the metal salt of pyrithione in the artificial food casing may easily be adjusted. Some metal salts of pyrithione are also also heat stable, non-volatile and safe to use in terms of food safety under certain limits.

The artificial food casing according to one or more embodiments of the invention is also easily shirred, deshirred and unrolled and can be readily peeled from the final (processed) food product.

### EXAMPLES

In the following, the present invention will be described in more detail. The description below discloses some embodiments and examples of the invention in such detail that a person skilled in the art is able to utilize the invention based on the disclosure. Not all steps of the embodiments are discussed in detail, as many of the steps will be obvious for the person skilled in the art based on this specification. The following examples were carried out in a small-scale testing laboratory; however, a person skilled in the art is able to scale the examples as desired.

### EXAMPLE 1.

Cellulose-based food casings comprising a fibrous reinforcement and regenerated cellulose were tested for their capability of inhibiting and/or suppressing mold growth on dry sausages.

Cellulose-based food casings comprising zinc pyrithione in admixture with regenerated cellulose (samples 5, 6, 7 and 8, so-called matrix samples) were manufactured by admixing viscose and an aqueous dispersion of zinc pyrithione (Zinc OMADINE™ 48% FPS, Arch Chemicals, Inc. containing 48% zinc pyrithione; particle size 5 microns or less 100%, 1 micron or less 90%). The casings were produced as double layer viscose casings (DVC) by coating a fibrous reinforcement layer on the outside with the mixture of viscose and the aqueous dispersion of zinc pyrithione; the inside of the fibrous reinforcement layer was coated with viscose. The DVC casings thus obtained were further treated by coagulation, regeneration, washing and drying steps using known methods. The DVC casings were produced so that they contained 32 g/m² of regenerated cellulose, of which 75% (corresponding to 24 g/m²) was disposed on the outside layer and 25% (corresponding to 8 g/m²) on the inside layer of the DVC casing. The amount of zinc pyrithione in the casings was 0.3% (corresponding to 0.96 g zinc pyrithione per m² of regenerated cellulose in the casing, sample 5), 1.0% (sample 6), 3.0% (sample 7) or 5.0% (sample 8) by weight based on the total dry weight of regenerated cellulose.

Zinc pyrithione was added to a comparable cellulose-based food casing by surface treatment (internal bubble coating) using an aqueous solution comprising 1.5% of zinc pyrithione. The surface treated casing was inverted and dried (sample 9).

As comparative samples, the following were included: a comparable cellulose-based food casing which did not contain any antifungal components (sample 1); a commercially available cellulose-based food casing known to have antifungal properties (the exact antifungal component not known) (sample 3); and a comparable cellulose-based food casing containing an alternative antimycotic component (natamycin) embedded into a coating layer (a printing ink layer) (sample 4) . Sample 4 was prepared by admixing natamycin and a printing ink matrix and printing the outside surface of the casing with the mixture of natamycin and printing ink matrix. The concentration of natamycin in the coating layer was about 20 000 ppm.

The cellulose-based food casings were soaked separately from each other and stuffed to produce sausages using well-known methods. The sausages were sprayed with Wiberg Biobak S10 solution (50 g/10 litre water for 1000 kg of product) and hung into an 80 litre bucket sealed with a plastic bag for storage. The testing conditions were selected so that they would promote mold growth and could be considered as extremely harsh. Mold growth on the sausages was assessed after 4, 6, 15 and 20 days and the percentage of the sausage surface covered by mold was recorded. The results are shown in Table 1.

**Table 1. Summary of the results of mold growth assay in cellulose-based food casings.**

| | | **Estimate in % surface covered by mold** | | | |
|---|---|---|---|---|---|
| **Sample** | **Identification** | **4d** | **6d** | **15d** | **20d** |
| Sample 1 | Reference (no antifungal treatment | 100 | 100 | 100 | 100 |
| Sample 3 | Competitive (working) sample | 0 | 0 | 5 | 30 |
| Sample 4 | Embedded alternative antimycotic (natamycin) | 0 | 0 | <5 | 10 |
| Sample 5 | Matrix sample 0.3 % | 100 | 100 | 100 | 100 |
| Sample 6 | Matrix sample 1.0 % | 30 | 100 | 100 | 100 |
| Sample 7 | Matrix sample 3.0 % | 0 | 0 | <5 | 30 |
| Sample 8 | Matrix sample 5.0 % | 0 | 0 | 0 | 0 |
| Sample 9 | Surface treatment 1.5 % solution | 0 | 10 | 100 | 100 |

It was found that cellulose-based food casings containing zinc pyrithione had significantly less mold growth than the reference casing (sample 1). Samples containing zinc pyrithione would also perform comparably or even better than a commercial competitive casing (sample 3) or a casing containing the alternative antimycotic embedded in a coating (sample 4).

### EXAMPLE 2.

A second test was performed with cellulose-based food casings similar to those described in Example 1. Sample 3 was prepared as sample 8 in Example 1. Sample 2 was prepared as samples 5-8 in Example 1, except that the casing comprising 3.5 % of zinc pyrithione was manufactured by admixing viscose and a different zinc pyrithione formulation (Zinc OMADINE™ ZOE Dispersion (Lonza) formulated to be colour-stable in the presence of e.g. soluble iron).

Sample 4 containing natamycin was included as a comparative sample and corresponded to sample 4 of Example 1.

The casings were stuffed with salami emulsion and inhibited with *Penicillium nalgiovense* on the same day. The sausages were hung in large buckets enclosed in plastic bags and stored at room temperature. Mold growth was observed 3 days later and daily thereafter. Sausages on which significant mold growth was observed were retained in the buckets so as to increase the harshness of the conditions. The results are shown in Table 2.

**Table 2. Summary of the results of mold growth assay in cellulose-based food casings.**

| **Sample** | **Identification** | **Mold growth observations** |
|---|---|---|
| Sample 1 | Reference (no antifungal treatment | Almost 100% mold coverage after 3 days |
| Sample 2 | Matrix sample 3.5 % | Mold growth after 10 days |
| Sample 3 | Matrix sample 5.0 % | No mold growth after 18 days |
| Sample 4 | Embedded alternative antimycotic (natamycin) | Mold growth after 4-5 days |

It was again found that cellulose-based food casings containing zinc pyrithione had significantly less mold growth than the reference casing. Samples containing zinc pyrithione would also perform comparably or even significantly better than casings containing alternative antimycotics.

### EXAMPLE 3.

A further test was performed with cellulose-based food casings similar to those described in Example 1. The outside surface of fibrous (DVC) casings (size 045) were coated by printing using a coating consisting of Revalux 168 series lacquer and Promotor 300/9700 series crosslinker (Resino). Zinc pyrithione (Acticide ZPD 1, THOR) was included in the coating to provide the following samples:
Sample 1: A total coating weight of 5.53 grams per 10 m casing, whereby 0.248 grams per 10 m zinc pyrithione or 0.53 wt. % zinc pyrithione versus total cellulose casing weight.
Sample 2: A total coating weight of 5.53 grams per 10 m casing, whereby 0.121 grams per 10 m zinc pyrithione or 0.26 wt. % zinc pyrithione versus total cellulose casing weight.
Sample 3: A total coating weight of 5.53 grams per 10 m casing whereby 0.048 grams per 10 m zinc pyrithione or 0.10% zinc pyrithione versus total cellulose casing weight.
Sample 4 (reference sample): A total coating weight of 5.53 grams per 10 m casing; no zinc pyrithione was included in the coating.

Each sample casing was stuffed with dry sausage emulsion and treated with a mold emulsion (Wiberg BIOBAK S containing *Penicillium nalgiovense).* Mold growth was observed 5 days later and daily thereafter and the percentage of the sausage surface covered by mold was recorded. The results are shown in Table 3.

**Table 3. Summary of the results of mold growth assay in zinc pyrithione-coated cellulose-based food casings.**

| **Sample** | **Identification** | **Estimate in % surface covered by mold** | | | |
|---|---|---|---|---|---|
| | | **5d** | **6d** | **7d** | **8d** |
| Sample 1 | 0.53 % zinc pyrithione by outside coating | <5 % | <5 % | <5 % | <5 % |
| Sample 2 | 0.26 % zinc pyrithione by coating | 5 % | 50 % | 75 % | >90 % |
| Sample 3 | 0.10 % zinc pyrithione by coating | >90 % | 100 % | | |
| Sample 4 | Reference (no antifungal treatment | 100 % | | | |

It was again found that cellulose-based food casings coated using a coating containing zinc pyrithione had less mold growth than the reference casing.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. An artificial food casing comprising a metal salt of pyrithione.

2. The artificial food casing according to claim 1, wherein the artificial food casing comprises regenerated cellulose, plastic and/or textile.

3. The artificial food casing according to claim 1 or 2, wherein the artificial food casing comprises a metal salt of pyrithione in admixture with regenerated cellulose.

4. The artificial food casing according to any one of claims 1 - 3, wherein the artificial food casing comprises a fibrous reinforcement comprising an inside surface and an outside surface; and an outside layer on the outside surface of the fibrous reinforcement and/or an inside layer on the inside surface of the fibrous reinforcement; wherein the outside layer and/or the inside layer comprises a metal salt of pyrithione in admixture with regenerated cellulose.

5. The artificial food casing according to any one of claims 1 - 4, wherein the metal salt of pyrithione is zinc pyrithione, copper pyrithione or a mixture thereof.

6. The artificial food casing according to any one of claims 1 - 5, wherein the artificial food casing comprises a coating comprising a metal salt of pyrithione.

7. The artificial food casing according to any one of claims 1 - 6, wherein the amount of the metal salt of pyrithione is sufficient to inhibit or suppress mold growth.

8. The artificial food casing according to any one of claims 1 - 7, wherein the artificial food casing comprises about 0.1 - 10%, or about 0.2 - 10%, or about 0.3 - 5%, or at least about 0.1%, or at least about 0.2%, or at least about 0.3%, or at least about 1%, or at least about 2%, or at least about 2.5%, or at least about 3%, or at least about 3.5%, or at least about 4%, or at least about 4.5%, or at least about 5% of the metal salt of pyrithione by weight based on the total dry weight of the artificial food casing.

9. A method for manufacturing the artificial food casing according to any one of claims 1 - 8, which method comprises adding a metal salt of pyrithione to the artificial food casing.

10. The method according to claim 9, wherein the method comprises:
step a) admixing viscose and the metal salt of pyrithione to obtain a mixture; and
step b1) extruding the mixture obtainable from step a) into an artificial food casing.

11. The method according to claim 9 or 10, wherein the method comprises:
step a) admixing viscose and the metal salt of pyrithione to obtain a mixture; and
step b2) impregnating the inside surface and/or outside surface of a fibrous reinforcement with the mixture obtainable from step a).

12. The method according to any one of claims 10 - 11, wherein step a) comprises admixing viscose and a composition comprising a metal salt of pyrithione.

13. The method according to any one of claims 9 - 12, which method comprises impregnating or coating an artificial food casing with a composition comprising a metal salt of pyrithione.

14. The method according to any one of claims 9 - 13, which method comprises coating an artificial food casing with a composition comprising a metal salt of pyrithione by printing.

15. The method according to any one of claims 12 - 14, wherein the composition comprising a metal salt of pyrithione comprises an aqueous dispersion of zinc pyrithione, copper pyrithione or a mixture thereof.

## Patentansprüche

1. Eine künstliche Nahrungsmittelhülle umfassend ein Metallsalz von Pyrithion.

2. Die künstliche Nahrungsmittelhülle gemäß Anspruch 1, wobei die künstliche Nahrungsmittelhülle regenerierte Zellulose, Kunststoff und / oder Textil umfasst.

3. Die künstliche Nahrungsmittelhülle gemäß Anspruch 1 oder 2, wobei die künstliche Nahrungsmittelhülle ein Metallsalz von Pyrithion in Mischung mit regenerierter Zellulose umfasst.

4. Die künstliche Nahrungsmittelhülle gemäß einem der Ansprüche 1-3, wobei die künstliche Nahrungsmittelhülle eine faserige Verstärkung umfasst, umfassend eine Innenfläche und eine Außenfläche; und eine Außenschicht auf der Außenfläche der faserigen Verstärkung und / oder eine Innenschicht auf der Innenfläche der faserigen Verstärkung; wobei die Außenschicht und / oder die Innenschicht ein Metallsalz von Pyrithion in Mischung mit regenerierter Zellulose umfasst.

5. Die künstliche Nahrungsmittelhülle nach einem der Ansprüche 1-4, wobei das Metallsalz von Pyrithion Zink-Pyrithion, Kupfer-Pyrithion oder ein Gemisch davon ist.

6. Die künstliche Nahrungsmittelhülle gemäß einem der Ansprüche 1-5, wobei die künstliche Nahrungsmittelhülle eine Beschichtung umfasst, umfassend ein Metallsalz von Pyrithion.

7. Die künstliche Nahrungsmittelhülle gemäß einem der Ansprüche 1 bis 6, wobei die Menge des Metallsalzes von Pyrithion ausreichend ist, um Schimmelwachstum zu hemmen oder zu unterdrücken.

8. Das künstliche Nahrungsmittelhülle nach einem der Ansprüche 1-7, wobei die künstliche Nahrungsmittelhülle etwa 0,1 - 10% oder etwa 0,2 bis 10% oder etwa 0,3 bis 5%, oder mindestens etwa 0,1%, oder zumindest etwa 0,2%, oder mindestens etwa 0,3%, oder mindestens etwa 1% oder zumindest etwa 2%, oder mindestens etwa 2,5%, oder mindestens etwa 3% oder mindestens etwa 3,5%, oder mindestens etwa 4%, oder mindestens etwa 4,5%, oder mindestens etwa 5% des Metallsalzes von Pyrithion, bezogen auf das Gesamttrockengewicht des künstlichen Nahrungsmittelhülle, umfasst.

9. Ein Verfahren zur Herstellung der künstlichen Nahrungsmittelhülle nach einem der Ansprüche 1-8, wobei das Verfahren die Zugabe eines Metallsalzes von Pyrithion zu der künstlichen Nahrungsmittelhülle umfasst.

10. Verfahren nach Anspruch 9, wobei das Verfahren umfasst:
Schritt a) Vermischen von Viskose und das Metallsalz von Pyrithion, um eine Mischung zu erhalten; und
Schritt b1) Extrudieren der Mischung aus Schritt a) in eine künstliche Nahrungsmittelhülle.

11. Verfahren nach Anspruch 9 oder 10, wobei das Verfahren umfasst:
Schritt a) Vermischen von Viskose und das Metallsalz von Pyrithion, um eine Mischung zu erhalten; und
Schritt b2) Imprägnieren der Innenfläche und / oder Außenfläche einer faserigen Verstärkung mit der Mischung aus Schritt a).

12. Verfahren nach einem der Ansprüche 10 bis 11, wobei Schritt a) das Vermischen von Viskose und einer Zusammensetzung umfassend ein Metallsalz von Pyrithion umfasst.

13. Das Verfahren gemäß einem der Ansprüche 9 bis 12, wobei das Verfahren das Imprägnieren oder Beschichten einer künstlichen Nahrungsmittelhülle mit einer Zusammensetzung umfassend ein Metallsalz von Pyrithion umfasst.

14. Verfahren nach einem der Ansprüche 9 bis 13, wobei das Verfahren das Beschichten einer künstlichen Nahrungsmittelhülle mit einer Zusammensetzung umfassend ein Metallsalz von Pyrithion durch Drucken umfasst.

15. Verfahren nach einem der Ansprüche 12 bis 14, wobei die Zusammensetzung umfassend ein Metallsalz von Pyrithion eine wäßrige Dispersion von Zink-Pyrithion, Kupfer-Pyrithion oder ein Gemisch davon, umfasst.

## Revendications

1. Enveloppe alimentaire artificielle comprenant un sel métallique de pyrithione.

2. Enveloppe alimentaire artificielle selon la revendication 1, dans laquelle l'enveloppe alimentaire artificielle comprend de la cellulose régénérée, du plastique et/ou du textile.

3. Enveloppe alimentaire artificielle selon les revendications 1 ou 2, dans laquelle l'enveloppe alimentaire artificielle comprend un sel métallique de pyrithione mélangé avec de la cellulose régénérée.

4. Enveloppe alimentaire artificielle selon l'une quelconque des revendications 1 à 3, dans laquelle l'enveloppe alimentaire artificielle comprend un renfort fibreux comprenant une surface intérieure et une surface extérieure ; et une couche extérieure sur la surface extérieure du renfort fibré et/ou une couche intérieure sur la surface intérieure du renfort fibré ; dans laquelle la couche extérieure et/ou la couche intérieure comprend/comprennent un sel métallique de pyrithione mélangé à de la cellulose régénérée.

5. Enveloppe alimentaire artificielle selon l'une quelconque des revendications 1 à 4, dans laquelle le sel métallique de pyrithione est du pyrithione de zinc, du pyrithione de cuivre ou un mélange des deux.

6. Enveloppe alimentaire artificielle selon l'une quelconque des revendications 1 à 5, dans laquelle l'enveloppe alimentaire artificielle comprend un revêtement comprenant un sel métallique de pyrithione.

7. Enveloppe alimentaire artificielle selon l'une quelconque des revendications 1 à 6, dans laquelle la quantité de sel métallique de pyrithione est suffisante pour inhiber ou supprimer le développement de moisissures.

8. Enveloppe alimentaire artificielle selon l'une quelconque des revendications 1 à 7, dans laquelle l'enveloppe alimentaire artificielle comprend environ 0,1 - 10 %, ou environ 0,2 - 10 %, ou environ 0,3 - 5 %, ou au moins environ 0,1 %, ou au moins environ 0,2 %, ou au moins environ 0,3 %, ou au moins environ 1 %, ou au moins environ 2 %, ou au moins environ 2,5 %, ou au moins environ 3 %, ou au moins environ 3,5 %, ou au moins environ 4 %, ou au moins environ 4,5 %, ou au moins environ 5 % de sel métallique de pyrithione par poids, en se basant sur le poids sec total de l'enveloppe alimentaire artificielle.

9. Méthode de fabrication de l'enveloppe alimentaire artificielle selon l'une quelconque des revendications 1 à 8, ladite méthode comprenant l'ajout de sel métallique de pyrithione à l'enveloppe alimentaire artificielle.

10. Méthode selon la revendication 9, dans laquelle la méthode comprend :
Étape a) le mélange de la viscose et du sel métallique de pyrithione pour obtenir un mélange ; et
Étape b1) l'extrusion du mélange obtenu à l'étape a) dans une enveloppe alimentaire artificielle.

11. Méthode selon les revendications 9 ou 10, dans laquelle la méthode comprend :
Étape a) le mélange de la viscose et du sel métallique de pyrithione pour obtenir un mélange ; et
Étape b2) l'imprégnation de la surface intérieure et/ou de la surface extérieure du renfort fibreux avec le mélange obtenu à l'étape a).

12. Méthode selon l'une quelconque des revendications 10 à 11, selon laquelle l'étape a) comprend le mélange de la viscose et d'une composition comprenant un sel métallique de pyrithione.

13. Méthode selon l'une quelconque des revendications 9 à 12, selon laquelle la méthode comprend l'imprégnation ou le revêtement d'une enveloppe alimentaire artificielle avec une composition comprenant un sel métallique de pyrithione.

14. Méthode selon l'une quelconque des revendications 9 à 13, selon laquelle ladite méthode comprend le revêtement d'une enveloppe alimentaire artificielle avec une composition comprenant un sel métallique de pyrithione par impression.

15. Méthode selon l'une quelconque des revendications 12 à 14, selon laquelle la composition comprenant un sel métallique de pyrithione comprend une dispersion aqueuse de pyrithione de zinc, de pyrithione de cuivre ou un mélange des deux.
